# EUROPEAN PATENT SPECIFICATION

(11) **EP 2 780 581 B1**
(45) Date of publication and mention of the grant of the patent: **24.08.2016**
(21) Application number: 12788256.1
(22) Date of filing: 01.10.2012
(51) Int. Cl.: F03B 17/06, F03D 3/02, F03D 3/06, F03D 3/00

(54) **TURBINE FOR THE PRODUCTION OF ELECTRIC ENERGY**
TURBINE ZUR ERZEUGUNG ELEKTRISCHER ENERGIE
TURBINE POUR LA PRODUCTION D'ÉNERGIE ÉLECTRIQUE

(30) Priority: 29.09.2011 IT UD20110150
(43) Date of publication of application: 24.09.2014
(73) Proprietor: Zanin, Fiorenzo, 31030 Breda di Piave (IT)
(72) Inventor: Zanin, Fiorenzo, 31030 Breda di Piave (IT)
(74) Representative: Petraz, Gilberto Luigi
(86) International application number: PCT/IB2012/001921
(87) International publication number: WO 2013/046011

(56) References cited:
- BE-A- 370 115
- DE-A1- 2 718 608
- DE-A1- 10 040 940
- DE-A1-102009 007 593
- FR-A1- 2 300 234
- US-A- 376 357
- US-A- 4 095 422
- US-A1- 2003 235 498

## Description

### FIELD OF THE INVENTION

The present invention concerns a turbine for the production of electric energy by exploiting water currents in big rivers, even navigable ones, in minor watercourses and also in the sea. The invention is also usable in relation to wind currents. In particular the turbine is suitable to be associated to an apparatus for the transformation of kinetic energy into electric energy.

### BACKGROUND OF THE INVENTION

The exploitation of hydraulic force to make electric energy by installing power stations along rivers and watercourses is known. This also entails making complementary works such as dams, pipes, dikes, the diversion and canalization of watercourses.

Structures such as hydroelectric micro-stations are also known, formed by apparatuses which allow to translate kinetic energy into electric energy, for example used to exploit water falls. For this purpose, mill-wheels have been adapted or replaced by traditional turbines.

The known traditional hydraulic turbines consist of a succession of elements fixed to the rotor, such as blades, scoops, wings, on part of which the force of water is concentrated by means of canalizations or pipes. In particular it is known that the rotation occurs on both a horizontal and a vertical axis.

Given that hydroelectric stations need to exploit high differences in levels or high flow rates, the complementary works described above have the drawback of being often imposing and therefore have considerable impact on the environment. Moreover, micro-stations have the disadvantage of being very expensive and can only be built when there are particular conditions in the bed of the watercourse where they are installed.

Document US-A-4,095,422 describes a water wheel with vertical oscillating blades to convert kinetic energy of a horizontal flow into mechanical energy.

Documents DE-A-10040940, DE-A-2718608, DE-A-102009007593, US-A-2003/235498 and FR-A-2.300.234 describe other machines with rotating blades of the known type.

Purpose of the present invention is to make a turbine which is totally immersed into the flow of fluid, for the production of electric energy, adaptable to the characteristics of the bed even of small watercourses. According to the invention it can be made of different sizes, with a vertical axis and without canalizations, substantially invisible outside the surface of the water, silent and with limited costs.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a turbine according to the present invention, which overcomes the limits of the state of the art and eliminates the defects present therein, produces electric energy by exploiting and converting the kinetic energy of water currents. The turbine essentially consists of at least a rotating unit, provided with at least three equidistant horizontally pivoting blades. Advantageously, the turbine consists of a plurality of rotating units, for example two rotating units, or multiples of two rotating units, to define a station. Several turbines can be provided associated with each other along a single axis. This allows to position the horizontally pivoting blades angularly, so as to obtain an advantageously helical distribution of the blades inside a station, which allows to obtain a continuous thrust and therefore a continuous rotatory motion.

According to a main feature of the present invention, the horizontally pivoting blades are connected to the rotating units by means of a hinge system, suitable to allow a pre-determined angular travel.

According to another advantageous characteristic, the horizontally pivoting blades are sectioned by discs which at least in the first thrust step canalize the flow of fluid streamlines, facilitating the correct positioning of the horizontally pivoting blades.

In particular, two or more stations are suitable to be possibly connected mechanically in series, so as to form a system in turn connectable to a unit to transform the kinetic energy into electric energy, thus constituting a plant for the production of electric energy.

According to a variant of the present invention, the installation of an autonomous system for the conversion of kinetic energy into electric energy is provided inside the turbine.

According to another feature of the present invention, the turbine provides that the rotation occurs around a substantially vertical and orthogonal axis with respect to the flow of fluid. Moreover, the turbine is substantially completely immersed in water.

In some forms of embodiment, the axis of rotation of the rotating unit is defined by a shaft having a polygonal cross section.

In variant embodiments, the cross section of the shaft is quadrilateral.

According to a secondary feature, the horizontally pivoting blades have a concave shape with respect to the fluid current. According to the invention, the concave shape can be maximized in relation to the characteristics of the flow of fluid.

According to a variant, the horizontally pivoting blades can have a shape that is torsionally deformed or twisted along its own axis of main development.

The rotation of the horizontally pivoting blades occurs following a predetermined angular travel around the pivoting axis. The travel is delimited by an operating position of maximum radial opening and by an operating position of minimum radial opening. This position of minimum radial opening is such as to facilitate the action of the fluid streamlines on the radial opening of the horizontally pivoting blade.

It is obvious that the angular mobility of the horizontally pivoting blade allows it to adapt to the fluid current, maximizing the thrust and at the same time preventing dangerous resistance in the non-operating step.

According to a variant, it is possible to adapt the materials and sizes of the turbine according to the present invention, in order to exploit the kinetic energy of wind currents.

According to a variant, the horizontally pivoting blades have the shape of an arc of a circle.

According to a variant, each of the rotating units comprises a spacer cylinder. According to a variant, the spacer cylinder comprises weighting material, such as for example concrete. For example, the spacer cylinder is made of, or filled with, weighting material.

According to a variant, each of the rotating units comprises circular discs.

According to a variant, maximum radial opening means and minimum radial opening means of the horizontally pivoting blades are provided.

According to a variant, the maximum radial opening means and the minimum radial opening means are associated to the circular discs.

In variant embodiments, the maximum radial opening means and the minimum radial opening means are formed by pins or bars.

According to a variant, each horizontally pivoting blade is associated to pivoting means to the rotating unit.

According to a variant, the pivoting means are associated to the circular discs. In variant embodiments, the pivoting means are formed by pins or bars.

In some forms of embodiment, the pins or bars of minimum radial opening, the pivoting pins or bars of the horizontally pivoting blades and possibly also the pins or bars of maximum radial opening, are long pins or bars, as long as the whole length of a station formed by the rotating units described above.

In some forms of embodiment, the circular discs comprise insertion holes for the pins or bars of minimum radial opening, of the pivoting pins or bars of the horizontally pivoting blades and possibly also of the pins or bars of maximum radial opening.

In variant embodiments, the insertion holes are grouped in pairs, each pair being formed by an internal hole and an external hole.

In variant embodiments, the number of pairs of insertion holes of a circular disc is a multiple of the number of horizontally pivoting blades connected to a single rotating unit.

In variant embodiments, the number of pairs of insertion holes of a circular disc is equal to the number of horizontally pivoting blades of a turbine or station.

Possible advantages of the present invention are the reduced production costs and the minor environmental impact, both visible and acoustic, since the turbine can be completely submerged. Moreover, the turbine of the present invention has greater possibilities of use, since it does not need water falls in order to function. Furthermore, the turbine of the present invention can easily be industrialized, as it is a module that can be assembled in a modular system for the production of electric energy.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a three-dimensional view of a possible system for the production of electric energy, comprising the present invention;
- fig. 2 is a three-dimensional view of one embodiment of the present invention;
- fig. 3 is a longitudinal section of a station of the system for the production of electric energy in fig.1;
- fig. 4 is a cross section of the station in fig. 3 according to the line I-I;

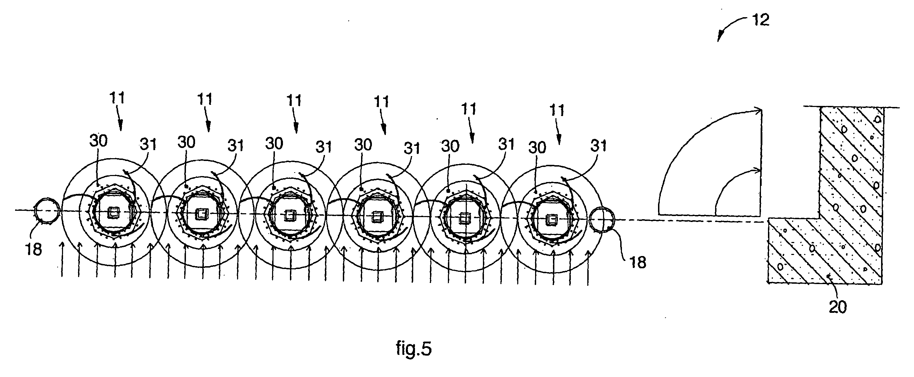

- fig. 5 is a plan view of the system in fig. 1;
- fig. 6 is a variant of fig. 3 in accordance with a second form of embodiment;
- fig. 7 is a detailed view of a detail of fig. 3;
- fig. 8 shows a variant of fig. 4;
- figs. 9 - 11 describe an assembly sequence of a variant of the present invention;
- fig. 12 shows an example of installation of the present invention.

### DESCRIPTION OF SOME FORMS OF EMBODIMENT

In the drawings, parts with the same functions have the same reference numbers.

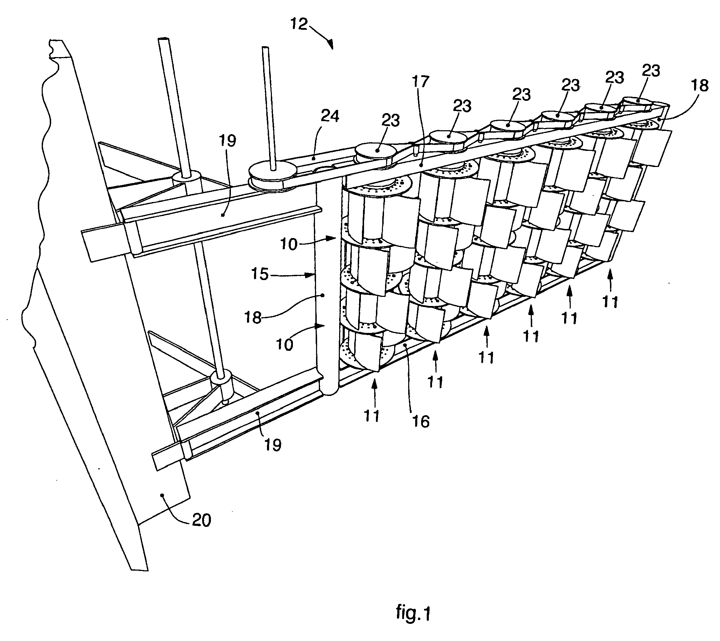

With reference to fig. 1, twelve turbines 10 placed two by two in line together constitute an example of a system for the production of electric energy 12. It comprises six stations 11, in this case all equal to each other, and disposed in this case at a short distance from each other along a watercourse. Each station 11 in this case consists of two turbines 10, stacked axially. By way of example, each single station 11 has a pulley 23 at the top suitable to be coupled to a belt 24. The belt 24 can be of the positive type and is suitable to transmit the rotatory motion to any device to transform kinetic energy into electric energy, not shown in the drawings and known to a person of skill in the art. In this way, a plant for the production of electric energy is obtained.

Alternatively, other transmission means or members can be used, such as a chain for example, or a universal joint or a rack or similar or comparable.

The turbines 10 can also be placed at intervals on two parallel rows.

The turbines 10 can be placed orthogonal to the current or angled with respect to it, for example with a maximum angle of about 20° in order to prevent reciprocal overlapping. The stations 11, in this example, are positioned inside a metal frame 15, in this case, consisting of a lower horizontal beam 16, an upper horizontal beam 17 and two lateral tubular elements 18. These allow, if necessary, to insert suitable anchoring means to the ground, such as poles, not shown in the drawings. The metal frame 15 in this case is hinged to a column 20, advantageously made near the bank of the watercourse by means of two metal arms 19. The latter allow the rotation of the system for the production of electric energy 12 and the disposition thereof parallel to the river bank, or in other positions.

As a variant, the system can have lifting means to facilitate maintenance operations, or in the case of high tides and other particular events.

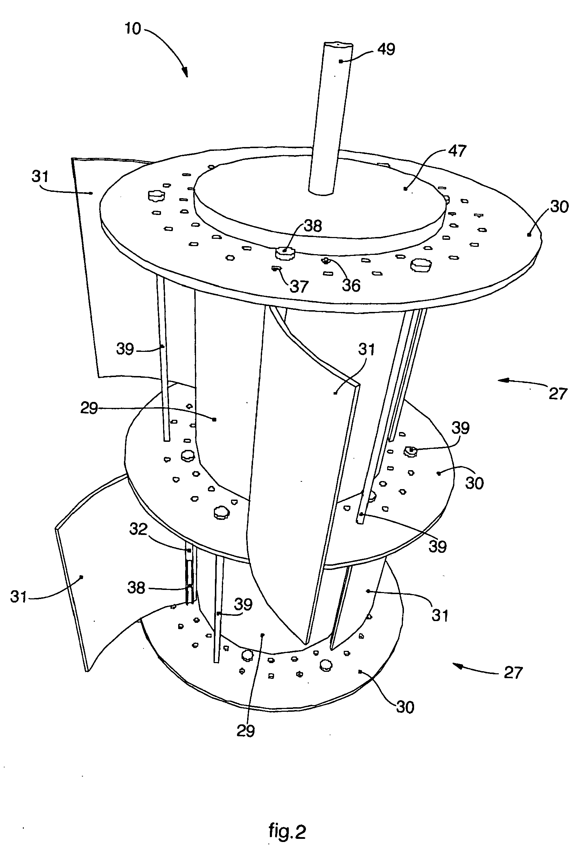

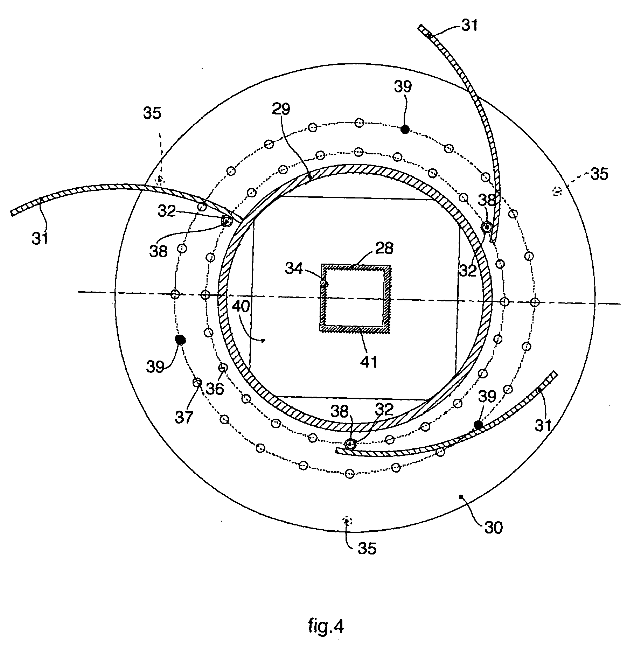

With reference to figs. 2, 3, 4 the turbine 10 comprises, in the basic solution, substantially two rotating units 27, stacked coaxially along the longitudinal axis of a shaft 28, in this case tubular, or hollow, even if solutions are provided in which the shaft 28 is solid. Each rotating unit 27 can represent a rotating module of a turbine 10. In this case, in some forms of embodiment the shaft 28 has a cross section which achieves a same-shape coupling which makes it solid with the rotating unit 27, allowing to transfer the rotation, or torsional moment, efficiently from the shaft 28 to the rotating unit 27, preventing an undesired reciprocal rotation thereof. In some forms of embodiment, the shaft 28 has a polygonal cross section, quadrilateral for example, such as square or rectangular. In variant embodiments, the cross section of the shaft 28 can be a polygon having from three to ten sides. This range in the number of sides guarantees stability and the necessary rotational constraint of the shaft 28.

In variant embodiments, the shaft 28 can have any other type of section and/or any other type of peripheral connection means, such as for example tongues or keys. However, it is believed that the form of embodiment of the shaft 28 with a, for example, polygonal cross section, which achieves the same-shape coupling in order to make it solid with the rotating unit 27, is advantageous in that it avoids using peripheral connection means, such as for example tongues, keys, pins or bolts, and obviates the need to carry out welding operations of the shaft 28, which, on the contrary, are needed for a shaft with a circular cross section.

Each rotating unit 27 comprises horizontally pivoting blades 31 which are offset with respect to those of the rotating unit positioned adjacent and above, in this case by about 60°. Each of the rotating units 27 comprises a spacer cylinder 29. Moreover, in some variant embodiments, each of the rotating units 27 also comprises two circular discs 30. These are opposite each other and positioned at the two ends of the spacer cylinder 29 and have the function of supporting, in this specific case, three equidistant horizontally pivoting blades 31. In this way a helical distribution of the horizontally pivoting blades 31 is obtained, advantageous inasmuch as it allows to obtain a continuity in the rotational motion. The spacer cylinder 29 keeps the circular discs at the desired correct distance.

Furthermore, in variant forms of embodiment the spacer cylinder 29 can have a smaller diameter, for example about half that of the corresponding circular disc 30 positioned above and below. This reduced diameter is believed to contribute to keeping the lying plane of the circular discs 30 orthogonal with respect to the axis of the turbine 10, which is important for the purposes of assembling the blades. Finally, the spacer cylinder 29, which is voluminous, contributes when immersed to reduce the section of the water front and to concentrate it onto the horizontally pivoting blades 31, recovering a part of the power which would otherwise be dispersed.

In this case, the horizontally pivoting blades 31 are concave in shape, and in the operating step are concordant with the fluid streamlines of the current. In some forms of embodiment, in section the horizontally pivoting blades 31 have a curvilinear profile with an arc of a circle. This can be obtained, in variant forms of embodiment, by calendering for example a metal sheet of adequate thickness. The calendering technique allows to obtain thin horizontally pivoting blades 31, for example made of metal sheet.

The horizontally pivoting blades 31 are also provided, in this specific case, with a pipe 32, welded on their concave surface, which has an edge that is intended to come into contact with the spacer cylinder 29, and thus constitutes the positioning of the horizontally pivoting blade 31 in the operating position of maximum radial opening.

In specific variant forms of embodiment, the calendering operation on the metal sheet is configured to obtain a profile of the horizontally pivoting blades 31 with an arc of a circumference having a length not more than, or slightly more than, one third of the circumference of the spacer cylinder 29, and with a radius equal to or more than that of the spacer cylinder 29. In variant forms of embodiment, the positioning in the seating of the horizontally pivoting blades 31 is achieved by means of a stainless steel pipe with a proportionate diameter, welded on one of the rectilinear edges of the calendered metal sheet; the pipe is kept slightly longer than the sheet at the ends in order to limit friction during rotation. The pipe is intercepted by a circular pin, threaded or not, able to slide inside the pipe, in coincidence with holes on the circular disc 30 at the point where the horizontally pivoting blade 31 is to be positioned.

According to a variant, an auxiliary pin or bar 35 may be provided, connecting the two circular discs 30 and able to function as a support to limit the individual horizontally pivoting blade 31 in its position of maximum radial opening.

The circular discs 30 of each rotating unit 27 comprise a central hole 34, suitable to connect mechanically with the shaft 28 in order to transmit the rotation to the shaft. Furthermore, the circular discs 30 comprise one or more rows of holes, disposed toroid, which are called internal holes 36 and external holes 37. There may also be another row of holes suitable for positioning the pins that limit the maximum radial opening of the horizontally pivoting blades 31. In the internal holes 36 a pivoting pin or bar 38 is positioned, which, inserted in the pipe 32, allows the hinged rotation of the horizontally pivoting blades 31. The external holes 37 house possible end-of-travel pins or bars 39, which define the operating position of minimum radial opening of the horizontally pivoting blades 31.

The minimum configuration of the system for the production of electric energy 12 provides a single station 11 consisting of a single turbine 10. Thanks to the modular characteristic of the present invention, it is possible to stack axially a larger number of turbines 10, according to the needs of the plant or design specifications.

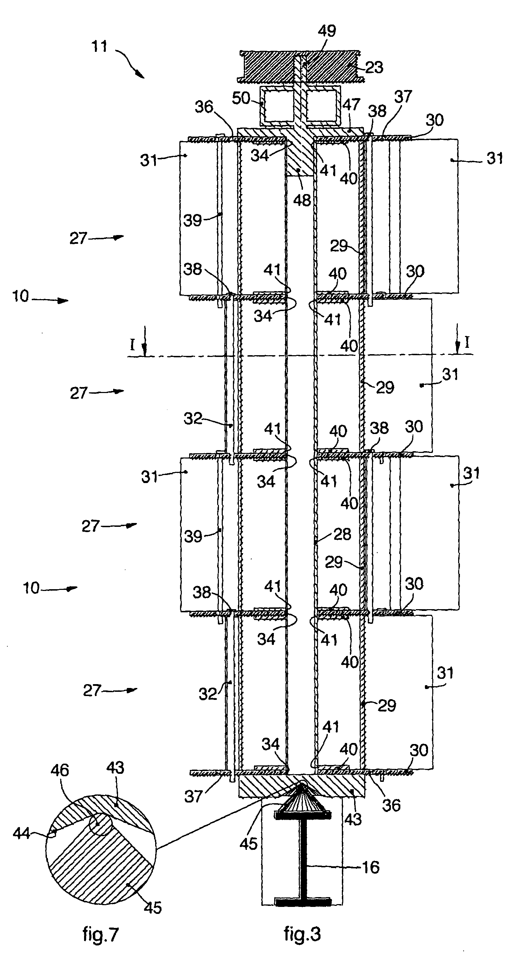

We shall now explain the method for installing the system given as an example in figs. 1 and 3.

At the lower end of each station 11 a support disc 43 is disposed, made solid circumferentially with the shaft 28 and suitable to be attached to the corresponding circular disc 30 by means of suitable attachment means, such as bolts, not shown in the drawings.

With reference to figs. 3 and 7, the lower face of the support disc 43 is in this case provided with a conical cavity 44, made at the center of the disc and suitable to be coupled with a centering cone 45 attached to the lower horizontal beam 16. The centering cone 45 is equipped in this case on the top with a free ball 46, which is the only point of contact between the parts.

As a variant, it is possible to replace the centering cone 45 by another friction reducing device, such as for example a thrust bearing and/or other known centering system.

On every support disc 43 a circular disc 30 is positioned, on which a centering plate 40 is rested, on the internal side of the corresponding rotating unit 27. At the center of the centering plate 40 a central hole 41 is made, with a section equal to the cross section of the shaft 28 in order to actuate the correct coupling. Advantageously, the cross section of the shaft 28 as identified above allows a stable rotational coupling with the centering plate 40.

The centering plate 40 in this case has the shape of a square, the edges of which are replaced by connectors with a radius equal to the internal radius of the spacer cylinder 29. The latter is inserted coaxially to the shaft 28 and rested on the circular disc 30 described above. Another circular disc 30 is inserted coaxially to the shaft 28 and rested on the spacer cylinder 29. In this case, two centering plates 40 are provided, analogous to the one described before, welded above and below the spacer cylinder 29. The rotating unit 27 is then completed by inserting the three horizontally pivoting blades 31 into the desired positions, attaching them by means of the respective pivoting pins 38 and the end-of-travel pins 39. The station is completed by repeating the procedure as described heretofore for other three rotating units 27. The top circular disc 30 is associated with a single centering plate 40, disposed on its lower face.

According to a variant, the spacer cylinder 29 is made of metal.

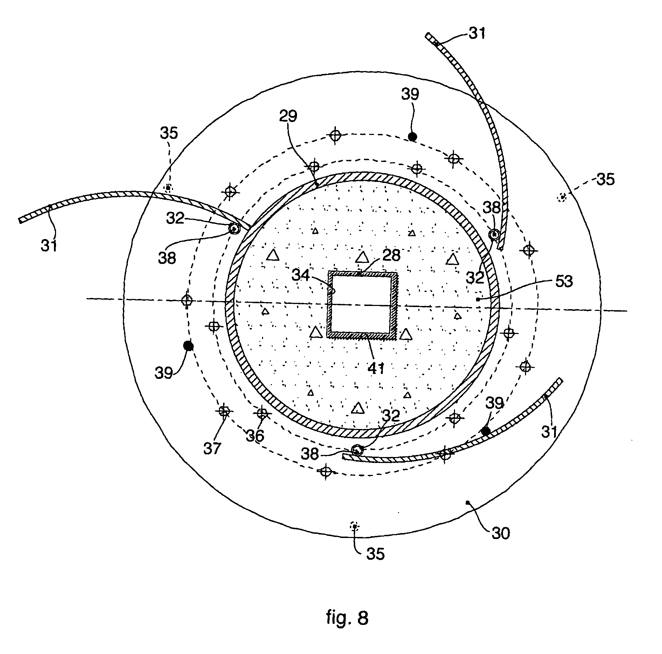

According to another variant, the spacer cylinder 29 is made of, or filled with, weighting material, such as for example concrete 53 (fig. 8), prefabricated by molding. The use of concrete 53 allows a saving because the centering plates 40 are no longer necessary, since the spacer cylinder 29 in this solution is provided with a transverse central hole with a section analogous to the rotation pin. Furthermore, the concrete 53 does not need protective treatments and keeps its properties for a long time before it needs replacement. With these characteristics, in this variant the spacer cylinder 29 also performs a more efficient function as a promoter of the rotation. In particular, the concrete spacer cylinder 29 functions as a damper for the opening impulses of the rotating blades 31, and causes the rotating unit 27 to accelerate and subsequently decelerate, facilitating the closing of the horizontally pivoting blades 31. This feature allows a better operativeness of the energy transforming systems connected to the turbines 10, which generally could be negatively influenced in their performance by the impulses. It is therefore believed that the weighting material has a function as a promoter to damp impulses.

Making the shaft 28 with the cross section as identified above also allows a stable rotational coupling with the concrete 53 that makes up the spacer cylinder 29.

In some forms of embodiment, the spacer cylinder 29 may consist of a section of metal pipe filled with concrete. In variant forms of embodiment, it is possible to drown, in the center of the section of concrete-filled metal pipe, a polygonal tubular element, for example square, for example made of stainless steel, able to slide exactly on the central polygonal pin, for example square, which constitutes the shaft 28 that defines the axis of the turbine 10. In variant forms of embodiment, however, it is not excluded that the spacer cylinder 29 is made completely of concrete with precision molds.

At the upper end of each station 11 a closing plate 47 is disposed, which in some forms of embodiment can be equipped in its lower part with an extension 48 suitable to connect mechanically with the shaft 28, and in its top part with an outlet shaft 49, to allow the friction reducing device 50 and the pulley 23 to be keyed on.

According to a variant, a single metal pipe replaces the various spacer cylinders 29 stacked in the modular solution and the circular discs 30 assume an annular shape. They are welded to the metal pipe while the method for mounting the horizontally pivoting blades 31 remains the same.

The system for the production of electric energy 12 as described heretofore functions as follows.

The system is completely immersed vertically in the flow of fluid streamlines, for example in a watercourse to exploit its current. The current hits the system for the production of electric energy 12 perpendicularly and exerts a thrust force on the horizontally pivoting blades 31 which, rotating around the axis of rotation of the pivoting pin 38, reach the operating position of maximum radial opening and thus exert a drive torque on the turbine 10 and consequently on the station 11 to which they belong. The rotational motion is transmitted by the corresponding shaft 28 and the corresponding outlet shaft 49 to each pulley 23 which in turn transmits it by means of the belt 24 to a known device for the conversion of kinetic energy into electric energy.

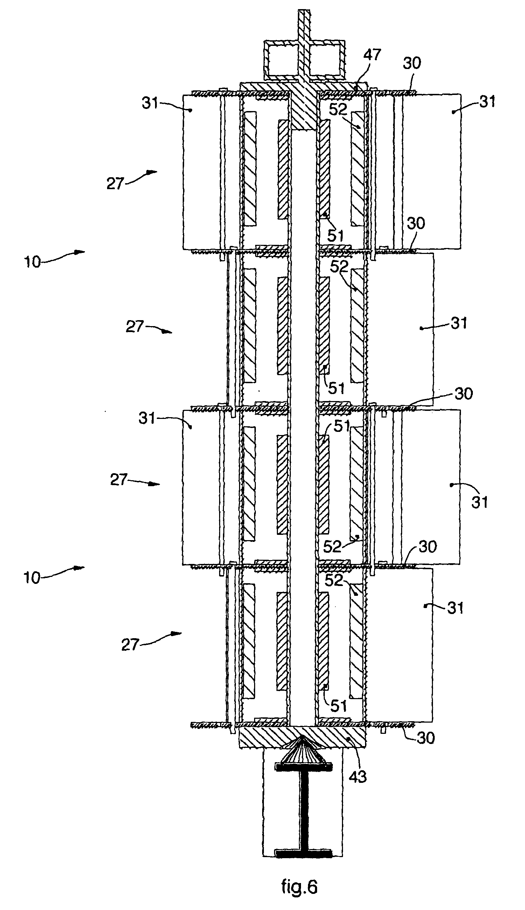

According to a variant (fig. 6) which provides a dynamo inside every turbine 10, the shaft 28 remains fixed, while only each rotating unit 27 rotates. In this case, a stator 51 will be installed on the shaft 28, while a rotor 52 will be installed on the rotating unit 27.

Figs. 8 - 11 show a variant form of embodiment of the present invention in which the circular discs 30 have the internal holes 36 and the external holes 37 made and grouped together in pairs formed by an internal hole 36 and an external hole 37. For each pair, the internal hole 36 and the external hole 37 are aligned along a common direction inclined with respect to a reference radial direction. In some forms of embodiment the plurality of internal holes 36 and external holes 37 are disposed in directions having the same inclination with respect to the cited reference radial direction. In some forms of embodiment, the plurality of internal holes 36 and external holes 37 are disposed in directions inclined in the same sense. Fig. 8 shows for example the case where the internal holes 36 and external holes 37 are disposed in directions inclined forward, that is, toward the right in fig. 8.

In some forms of embodiment, the number of pairs of internal holes 36 and external holes 37 of a circular disc 30 of each module formed by a rotating unit 27 is a multiple of the number of horizontally pivoting blades 31 connected to a single rotating unit 27, so that the number of pairs of internal holes 36 and external holes 37 of a circular disc 30 is equal overall to the number of all the horizontally pivoting blades 31 of each station 11 formed by several turbines 10.

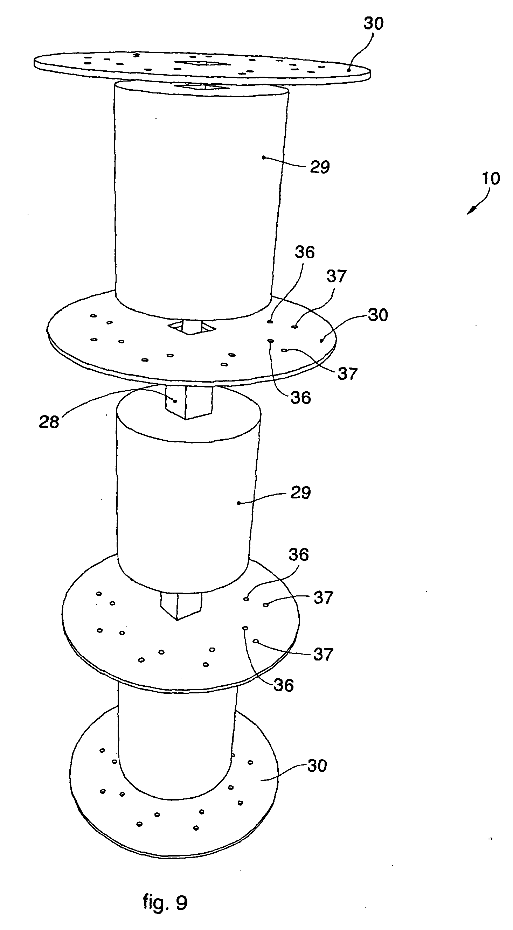

The Applicant has identified an optimum and sufficient number of pairs of internal holes 36 and external holes 37 that minimize the number of pivoting pins 38 and end-of-travel pins 39 needed, and possibly of auxiliary pins 35. In particular, fig. 8 shows an optimized example in which nine pairs of internal holes 36 and external holes 37 are provided, for the specific configuration of a turbine 10 with three modules formed by rotating units 27, in which each module comprises three horizontally pivoting blades 31 associated with the corresponding spacer cylinder 29, as in figs. 9 - 11. In this case, the number of pairs of internal holes 36 and external holes 37 is nine and is three times the number of horizontally pivoting blades 31 of a single rotating unit 27 and is equal to the nine horizontally pivoting blades 31 of the turbine 10 with three modules.

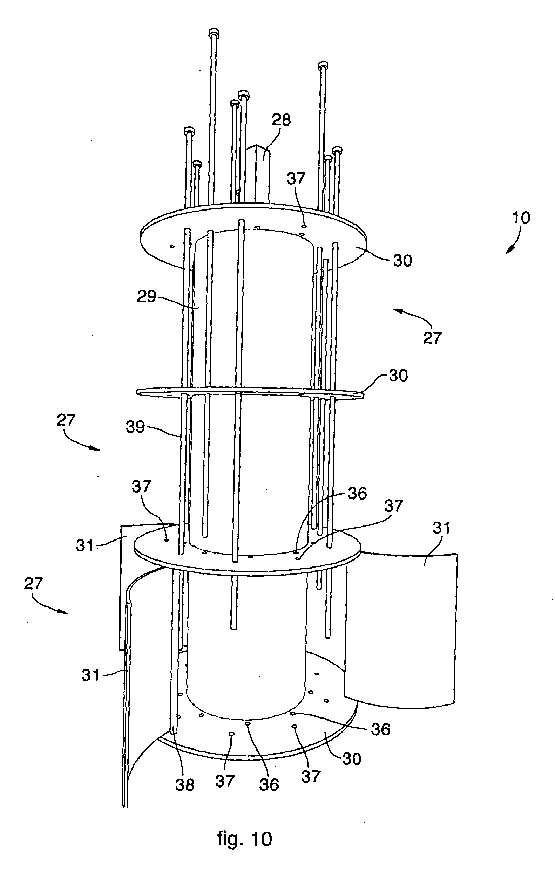

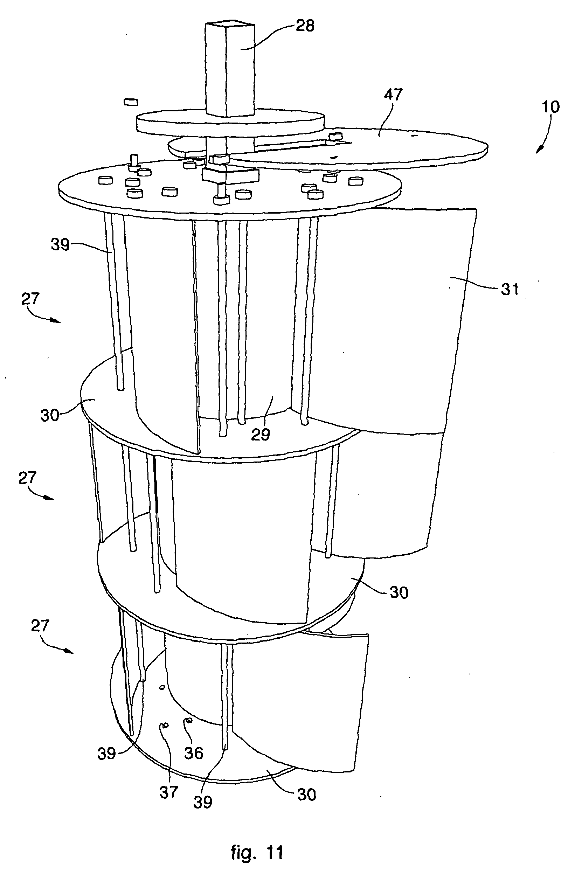

In this variant, long pins or bars are used which have an overall length that goes from one end of the turbine 10 to the other and which are inserted and removed from above, in through manner, into/from the corresponding internal holes 36 and external holes 37, as can be seen in figs. 9 - 11 which show assembly sequences of the spacer cylinders 29 and the circular discs 30 (fig. 9), insertion of the long pins and pivoting of the horizontally pivoting blades 31 (fig. 10) and closing the ends (fig. 11).

In this way, since each of the long pins or bars is a single oblong element which affects the whole height of the turbine 10, and thanks to the disposition described above of the internal holes 36 and external holes 37, each long pin or bar can perform a different function along the axis of the turbine, in particular the function of a minimum end-of-travel pin 39 at a certain height for the horizontally pivoting blade 31 of a module formed by one rotating unit 27, and the same long pin can perform the function of a pivoting pin 38 at another height for a horizontally pivoting blade 31 of another module, or even as an auxiliary maximum end-of-travel pin 35 at a still different height. In this way the number of long pins needed is minimized, which are easily inserted and/or removed from above, even when the turbines 10 are in a semi-immersed condition.

In specific forms of embodiment, the circular discs 30 are made of stainless steel.

In variant forms of embodiment, the circular discs 30 have a diameter equal to about double that of the spacer cylinder 29, and have a polygonal central hole, for example square, along which the shaft 28 is able to slide.

In variant forms of embodiment, the circular discs 30 have two series of holes 36, 37, equidistant and on two concentric circumferences.

The position of the holes 36, 37 adopted and shown in figs. 9 - 11 is convenient in the case of a turbine 10 consisting of three modules of overlapping rotating units 27 with three horizontally pivoting blades 31 for each level, since it reduces to a minimum the number of pins needed to attach all the blades.

In this form of embodiment nine horizontally pivoting blades 31 are used and hence on the smallest radius circumference, corresponding to the axis of rotation of the blades, there are nine equidistant holes 36. Eighteen pins would therefore be needed to position the end-of-travel pins of maximum and minimum opening. However, according to some forms of embodiment of the present invention, by positioning the holes 37 at the right distance along a more outer circumference associated with the end-of-travel pins, it is possible to make the same pin work several times on different levels, reducing to nine the holes 37 for the end-of-travel pins too. This configuration can be considered valid also for turbines of different sizes, provided that the distances are adapted proportionately.

According to one form of embodiment, the axis of rotation of the horizontally pivoting blades 31 between maximum and minimum opening position, defined by the pivoting of the horizontally pivoting blades 31 by the pivoting pin 38, is in a position as close as possible to the spacer cylinder 29, and the rotation to move to the work position occurs toward the outside. In this way, the opening movement always occurs toward the outside, that is, the free edge of the horizontally pivoting blade 31 is distanced from the main axis of rotation of the turbine 10 defined by the shaft 28. This disposition is considered advantageous when the horizontally pivoting blade 31 returns to the passive state, because it reduces to a minimum the blade's resistance in the passive state, and the possibility that foreign bodies might get jammed in the mechanism.

It is clear, however, that modifications and/or additions of parts may be made to the turbine 10 as described heretofore, without departing from the field and scope of the present invention.

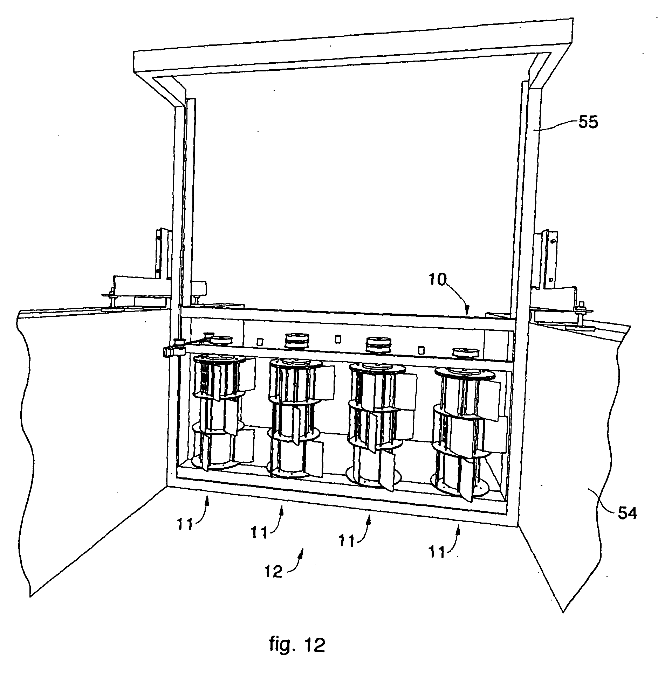

For example, fig. 12 shows a variant of a system for the production of electric energy 12 in which turbines 10 are provided with three modules formed by rotating units 27 with horizontally pivoting blades 31, grouped together in four stations 11, supported by a frame 55 and positioned in a channel 54 of a watercourse. This 3x4 form of embodiment is considered to optimize the distribution of the weights, and also assembly and maintenance.

This configuration, shown as an example in fig. 12, in which the turbines 10 are aligned in series along respective axes, can be defined as a comb-like configuration of several turbines 10 connected to each other and is believed to be effective for intercepting the greatest kinetic energy produced in the section of watercourse. The number of turbines and the vertical height depend on the sizes of the watercourse on which they are installed, but by and large they are intended to cover the greatest possible section of the watercourse. All the individual elements of a station 11 can be synchronized to function guaranteeing a linear rotation in every condition.

One form of embodiment provides a micro-station for the conversion into electric energy, which comprises four turbines 10 connected in series of three modules of rotating units 27. In this specific configuration there are twelve rotating modules, three in height and four in width, moving in synchrony. Every module of rotating unit 27 comprises three horizontally pivoting blades 31, located at 120° with respect to each other; in a vertical direction in the upper modules, the position of the respective horizontally pivoting blades 31 can be angularly offset by 40°; in a horizontal direction, the horizontally pivoting blades 31 of the modules at the same height can be progressively mounted with a deviation of 30°.

This distribution can be advantageous to guarantee continuity of movement and allows to keep a continuous movement even under variable conditions of the water level.

One example of assembly is a basic turbine 10 consisting of an axis of rotation defined by a shaft 28 and three vertical levels defined by modules of rotating units 27.

For example, a turbine 10 of this type comprises:
- a shaft 28 formed by a central pin with a square section, made of stainless steel, with a push rod and a lower support disc;
- four holed stainless steel discs;
- a holed stainless steel disc, for the upper clamping of the pins;
- an aluminum pulley, suitably sized;
- three spacer cylinders 29, made of metal and concrete or only concrete;
- nine horizontally pivoting blades 31, made of stainless steel;
- nine stainless steel pins or bars, threaded or not, long;
- six stainless steel pins or bars, threaded or not, medium;
- three stainless steel pins or bars, threaded or not, short;
- stainless steel small hardware.

With reference to figs. 9 - 11, a method to assemble a turbine 10 comprises:
- a first step in which a circular disc 30 and a spacer cylinder 29 are stacked alternately on the central pin which defines the shaft 28, until the penultimate disc, for example the fourth; this step does not need any clamping operation and the various elements remain in place through the force of gravity alone;
- a second step in which the elements in the first step are positioned and attached to the frame of the station by means of two bearings, a lower thrust bearing and a lateral upper bearing;
- a third step in which the first three horizontally pivoting blades 31 are inserted on the lower level, keying from above, through the aligned holes 36, 37 of the circular discs 30, three long bars to anchor the horizontally pivoting blades 31 and six long bars to clamp the maximum and minimum opening;
- a fourth step in which the three horizontally pivoting blades 31 are inserted on the intermediate level, keying from above, through the aligned holes 36, 37 of the circular discs 30, three medium bars to anchor the horizontally pivoting blades 31 and three medium bars to clamp the maximum opening;
- a fifth step in which the last three horizontally pivoting blades 31 are inserted on the upper level, keying from above, through the aligned holes 36, 37 of the circular discs 30, three short bars to anchor the horizontally pivoting blades 31, taking care that they are comprised inside the respective maximum and minimum opening blocks;
- a sixth step in which the last disc, for example the fifth, is positioned above the bolts or other clamping systems that support the bars, and is clamped with bolts on two or three of the pins to which, previously, a lower restraining bolt was screwed under the penultimate disc, for example the fourth. At this point the pulley can be connected to the belt and tensed.

A possible advantage of the present invention is considered to be that the operations to mount the horizontally pivoting blades 31 are all performed from above, without needing to intervene with small hardware in the lower part, and that a horizontally pivoting blade 31 can be replaced simply by removing the bar, removing the damaged blade and aligning a new one.

It is also clear that, although the present invention has been described with reference to some specific examples, a person of skill in the art shall certainly be able to achieve many other equivalent forms of turbine 10, having the characteristics as set forth in the claims and hence all coming within the field of protection defined thereby.

## Claims

1. Turbine for the production of electric energy associated with a system for the production of electric energy (12), consisting at least of one station (11) operating in a flow of fluid streamlines, such as water or air, said turbine consisting of at least two rotating units (27) provided with equidistant blades (31), **characterized in that** the blades (31) of each of the rotating units (27) are horizontally pivoting around a pivoting axis substantially parallel to the axis of the respective rotating unit (27) and have a position of maximum radial opening and a position of minimum radial opening, **in that** said blades (31) are concave in shape and are, in use, concordant with the fluid streamlines of the current, **in that** each rotating unit (27) has its own axis of rotation substantially vertical and orthogonal with respect to the flow of fluid, said axis of rotation being defined by a shaft (28) having a polygonal cross section, each of said rotating units (27) comprising a spacer cylinder (29) and two circular discs (30) positioned opposite each other at the two ends of the spacer cylinder (29), said circular discs (30) supporting said blades (31), each of said circular discs (30) comprising a central hole (34) connected mechanically with the shaft (28) and one or more rows of internal holes (36) and external holes (37), in the internal holes (36) a pivoting pin or bar (38) being positioned, which is inserted in the pipe (32) and allows the hinged rotation of the horizontally pivoting blades (31), and **in that** each of said blades (31) is provided with positioning means of maximum radial opening comprising a pipe (32), welded on the concave surface of the blade (31), which has an edge intended to come into contact with the spacer cylinder (29) in the operating position of maximum radial opening, and is provided with positioning means of minimum radial opening comprising end-of-travel pins or bars (39) housed in the external holes (37) to define the operating position of minimum radial opening of the horizontally pivoting blades (31),
wherein the axis of rotation of the horizontally pivoting blades (31) between maximum and minimum opening position is in a position close to the spacer cylinder (29), and the rotation of the horizontally pivoting blades (31) to move to the work position occurs toward the outside, such that the opening movement provides that the free edge of the horizontally pivoting blade (31) is distanced from the main axis of rotation defined by the shaft (28).

2. Turbine as in claim 1, **characterized in that** there are at least three of said horizontally pivoting blades (31).

3. Turbine as in any claim hereinbefore, **characterized in that** said position of minimum radial opening is configured to facilitate the action of radial opening of said horizontally pivoting blade (31) by the fluid streamlines.

4. Turbine as in any claim hereinbefore, **characterized in that** said blades (31) have the shape of an arc of a circle.

5. Turbine as in claim 4, **characterized in that** the horizontally pivoting blades (31) have a profile with an arc of a circumference having a length not more than, or slightly more than, one third of the circumference of the spacer cylinder (29), and with a radius equal to or more than that of the spacer cylinder (29).

6. Turbine as in any claim hereinbefore, **characterized in that** the spacer cylinder (29) comprises weighting material.

7. Turbine as in any claim hereinbefore, **characterized in that** it is made of elements which can be disassembled.

8. Turbine as in any claim hereinbefore, **characterized in that** it is a module able to constitute a modular system.

9. Turbine as in any claim hereinbefore, **characterized in that** it can be assembled in a modular manner to create a modular system for the production of electric energy (12).

10. Turbine as in any claim hereinbefore, **characterized in that** it can be connected externally to a device to convert kinetic energy into electric energy.

11. Turbine as in any claim hereinbefore, **characterized in that** inside it has an autonomous system for converting kinetic energy into electric energy.

12. Turbine as in any claim hereinbefore, **characterized in that** the axis of rotation of the horizontally pivoting blades (31) between the maximum opening position and the minimum opening position is in a position such that the opening movement of the horizontally pivoting blades (31) occurs toward the outside.

13. Turbine as in any claim hereinbefore, **characterized in that** an auxiliary pin or bar (35) is provided, connecting the two circular discs (30) and configured to function as a support to limit the individual horizontally pivoting blade (31) in its position of maximum radial opening.

14. Turbine as in any claim hereinbefore, **characterized in that** the circular discs (30) have the internal holes (36) and the external holes (37) made and grouped together in pairs formed by an internal hole (36) and an external hole (37), for each pair, the internal hole (36) and the external hole (37) being aligned along a common direction inclined with respect to a reference radial direction.

15. Turbine as in claim 14, **characterized in that** the number of pairs of internal holes (36) and external holes (37) of each circular disc (30) of the rotating unit (27) is a multiple of the number of horizontally pivoting blades (31) connected to the single rotating unit (27), the number of pairs of internal holes (36) and external holes (37) being provided to minimizes the number of pivoting pins (38) and end-of-travel pins (39).

16. Turbine as in claim 14 or 15, **characterized in that** long pins or bars are provided which have an overall length that goes from one end of the turbine to the other and which are inserted and removed from above, in through manner, into/from the corresponding internal holes (36) and external holes (37), each of the long pins or bars being a single oblong element which affects the whole height of the turbine, and each long pin or bar performing a different function along the axis of the turbine, including the function of a minimum end-of-travel pin (39) at a certain height for the horizontally pivoting blade (31) of one rotating unit (27), and the same long pin performs the function of a pivoting pin (38) at another height for a horizontally pivoting blade (31) of the other rotating unit (27).

17. System formed by a plurality of turbines as in any claim hereinbefore, **characterized in that** the turbines are located coaxially and the corresponding horizontally pivoting blades (31) are located in a sequential manner, so as to form a substantially helical development along the longitudinal direction of said turbine.

18. Method for the functioning of a turbine according to any claim from 1 to 16 for the production of electric energy associated with a system for the production of electric energy (12), **characterized in that** said turbine is located substantially orthogonal to the upper plane of the current of the fluid streamlines, in order to be hit by said fluid streamlines, which open the horizontally pivoting blades (31) and transfer the kinetic energy of the fluid to the progressively open horizontally pivoting blades (31) and the rotation of the horizontally pivoting blades (31) to move to the work position occurs toward the outside, such that in the opening movement the free edge of the horizontally pivoting blade (31) is distanced from the main axis of rotation defined by a shaft (28) of the turbine.

19. Plant for the production of electric energy, **characterized in that** it comprises at least one station (11), consisting of at least one turbine (10) according to any claim from 1 to 16, possibly suitable to be connected mechanically to at least another station (11) to form a system for the production of electric energy (12), suitable to be connected, in turn, to an external unit to transform the kinetic energy into electric energy.

20. Plant for the production of electric energy, **characterized in that** it comprises at least one station (11), consisting of at least one turbine (10) according to any claim from 1 to 16, provided inside it with an autonomous system for the conversion of kinetic energy into electric energy, said station (11) possibly being suitable to be connected mechanically to at least another station (11) to form a system for the production of electric energy (12).

## Patentansprüche

1. Turbine zur Erzeugung elektrischer Energie, die mit einem System zur Erzeugung elektrischer Energie (12) verbunden ist, bestehend zumindest aus einer Station (11), die in einem Fluss von Flüssigkeitsstromlinien, wie Wasser oder Luft, arbeitet, wobei die genannte Turbine zumindest aus zwei Dreheinheiten (27) besteht, die mit gleich weit entfernten Schaufeln (31) versehen sind, **dadurch gekennzeichnet, dass** die Schaufeln (31) von jeder der Dreheinheiten (27) horizontal um eine Schwenkachse schwenken, die im Wesentlichen parallel zur Achse der jeweiligen Dreheinheit (27) ist, und eine Stellung größter radialer Öffnung und eine Stellung kleinster radialer Öffnung haben, dass die genannten Schaufeln (31) konkavförmig sind und, bei der Benutzung, mit den Flüssigkeitsstromlinien des Stroms übereinstimmend sind, dass jede Dreheinheit (27) ihre eigene Drehachse hat, die im Wesentlichen vertikal und rechtwinklig im Hinblick auf die Flüssigkeitsströmung ist, wobei die genannte Drehachse durch eine Welle (28) mit einem polygonalen Querschnitt definiert ist, wobei jede der genannten Dreheinheiten (27) einen Abstandszylinder (29) und zwei Kreisscheiben (30) umfasst, die an den beiden Enden des Abstandszylinders (29) einander gegenüberliegend angeordnet sind, wobei die genannten Kreisscheiben (30) die genannten Schaufeln (31) stützen, wobei jede der genannten Kreisscheiben (30) ein zentrales Loch (34), das mit der Welle (28) mechanisch verbunden ist, und eine oder mehrere Reihen von Innenlöchern (36) und Außenlöchern (37) umfasst, wobei in den Innenlöchern (36) ein Drehzapfen oder -stange (38) positioniert ist, der bzw. die in das Rohr (32) eingeführt ist und die gelenkige Drehung der horizontal schwenkbaren Schaufeln (31) ermöglicht, und dass jede der genannten Schaufeln (31) mit Positioniermitteln mit größter radialer Öffnung versehen ist, die ein Rohr (32) umfassen, das an der konkaven Fläche der Schaufel (31) geschweißt ist, die eine Kante aufweist, die mit dem Abstandszylinder (29) in der Betriebsstellung größter radialer Öffnung in Kontakt kommen soll, und mit Positioniermitteln mit kleinster radialer Öffnung versehen ist, die Endanschlagzapfen oder -stangen (39) umfassen, die in den Außenlöchern (37) untergebracht sind, um die Betriebsstellung kleinster radialer Öffnung der horizontal schwenkbaren Schaufeln (31) zu definieren,
worin die Drehachse der horizontal schwenkbaren Schaufeln (31) zwischen größter und kleinster radialer Öffnungsstellung sich in einer Stellung befindet, die dem Abstandszylinder (29) nahe kommt, und die Drehung der horizontal schwenkbaren Schaufeln (31), um sich zur Arbeitsstellung zu bewegen, nach außen erfolgt, so dass die Öffnungsbewegung vorsieht, dass die freie Kante der horizontal schwenkbaren Schaufel (31) von der Hauptdrehachse, die von der Welle (28) definiert ist, beabstandet ist.

2. Turbine nach Anspruch 1, **dadurch gekennzeichnet, dass** es mindestens drei von den genannten horizontal schwenkbaren Schaufeln (31) gibt.

3. Turbine nach einem der vorhergehenden Ansprüche, **dadurch gekennzeichnet, dass** die genannte Stellung kleinster radialer Öffnung so gestaltet ist, um die Wirkung der radialen Öffnung der genannten horizontal schwenkbaren Schaufel (31) durch die Flüssigkeitsstromlinien zu erleichtern.

4. Turbine nach einem der vorhergehenden Ansprüche, **dadurch gekennzeichnet, dass** die genannten Schaufeln (31) die Form eines Kreisbogens haben.

5. Turbine nach Anspruch 4, **dadurch gekennzeichnet, dass** die horizontal schwenkbaren Schaufeln (31) ein Profil mit einem Umfangsbogen mit einer Länge aufweisen, die nicht größer, oder nur geringfügig größer, als ein Drittel des Umfangs des Abstandszylinders (29) ist, und mit einem Radius, der demjenigen des Abstandszylinders (29) gleich oder größer als dieser ist.

6. Turbine nach einem der vorhergehenden Ansprüche, **dadurch gekennzeichnet, dass** der Abstandszylinder (29) Beschwerungsmaterial umfasst.

7. Turbine nach einem der vorhergehenden Ansprüche, **dadurch gekennzeichnet, dass** sie aus Elementen besteht, die ausgebaut werden können.

8. Turbine nach einem der vorhergehenden Ansprüche, **dadurch gekennzeichnet, dass** sie ein Modul ist, das ein Modularsystem bilden kann.

9. Turbine nach einem der vorhergehenden Ansprüche, **dadurch gekennzeichnet, dass** sie in modularer Form zusammengebaut werden kann, um ein Modularsystem zur Erzeugung elektrischer Energie (12) zu schaffen.

10. Turbine nach einem der vorhergehenden Ansprüche, **dadurch gekennzeichnet, dass** sie außen mit einer Vorrichtung verbunden sein kann, um kinetische Energie in elektrische Energie umzuwandeln.

11. Turbine nach einem der vorhergehenden Ansprüche, **dadurch gekennzeichnet, dass** sie in ihrem Inneren ein selbständiges System zur Umwandlung von kinetischer Energie in elektrische Energie hat.

12. Turbine nach einem der vorhergehenden Ansprüche, **dadurch gekennzeichnet, dass** die Drehachse der horizontal schwenkbaren Schaufeln (31) zwischen der größten Öffnungsstellung und der kleinsten Öffnungsstellung sich in einer solchen Stellung befindet, dass die Öffnungsbewegung der horizontal schwenkbaren Schaufeln (31) nach außen erfolgt.

13. Turbine nach einem der vorhergehenden Ansprüche, **dadurch gekennzeichnet, dass** ein Hilfszapfen oder -stange (35) vorgesehen ist, der bzw. die die beiden Kreisscheiben (30) verbindet und so gestaltet ist, um als Stütze zu dienen, um die einzelne horizontal schwenkbare Schaufel (31) in ihrer Stellung von größter radialer Öffnung zu begrenzen.

14. Turbine nach einem der vorhergehenden Ansprüche, **dadurch gekennzeichnet, dass** die Kreisscheiben (30) die Innenlöcher (36) und die Außenlöcher (37) aufweisen, die in Paaren ausgeführt und zusammen gruppiert sind, die, für jedes Paar, aus einem Innenloch (36) und aus einem Außenloch (37) gebildet sind, wobei das Innenloch (36) und das Außenloch (37) entlang einer gemeinsamen Richtung ausgerichtet sind, die im Hinblick auf eine radiale Bezugsrichtung geneigt ist.

15. Turbine nach Anspruch 14, **dadurch gekennzeichnet, dass** die Anzahl der Paare von Innenlöchern (36) und Außenlöchern (37) jeder Kreisscheibe (30) der Dreheinheit (27) ein Vielfaches der Anzahl der horizontal schwenkbaren Schaufeln (31) ist, die mit der einzelnen Dreheinheit (27) verbunden sind, wobei die Anzahl der Paare von Innenlöchern (36) und Außenlöchern (37) so vorgesehen ist, um die Anzahl von Drehzapfen (38) und von Endanschlagzapfen (39) zu minimieren.

16. Turbine nach Anspruch 14 oder 15, **dadurch gekennzeichnet, dass** lange Zapfen oder Stangen vorgesehen sind, die eine Gesamtlänge haben, die von einem Ende der Turbine bis zum anderen reicht, und die, in durchgehender Weise, von oben in die bzw. aus den dazugehörigen Innenlöchern (36) und Außenlöchern (37) eingeführt und entfernt werden, wobei jeder bzw. jede der langen Zapfen oder Stangen ein einzelnes längliches Element ist, das auf die ganze Höhe der Turbine wirkt, und jeder bzw. jede lange Zapfen oder Stange eine verschiedene Funktion entlang der Achse der Turbine erfüllt, einschließlich der Funktion eines minimalen Endanschlagzapfens (39) bei einer bestimmten Höhe für die horizontal schwenkbare Schaufel (31) einer Dreheinheit (27), und derselbe lange Zapfen die Funktion eines Drehzapfens (38) bei einer anderen Höhe für eine horizontal schwenkbare Schaufel (31) der anderen Dreheinheit (27) erfüllt.

17. System gebildet durch eine Vielzahl von Turbinen nach einem der vorhergehenden Ansprüche, **dadurch gekennzeichnet, dass** die Turbinen gleichachsig angeordnet sind und die dazugehörigen horizontal schwenkbaren Schaufeln (31) sequenziell angeordnet sind, um dadurch einen im Wesentlichen schraubenlinienförmigen Verlauf entlang der Längsrichtung der genannten Turbine zu bilden.

18. Verfahren zum Betreiben einer Turbine nach einem der Ansprüche 1 bis 16 zur Erzeugung elektrischer Energie, die mit einem System zur Erzeugung elektrischer Energie (12) verbunden ist, **dadurch gekennzeichnet, dass** die genannte Turbine im Wesentlichen rechtwinklig zur oberen Ebene des Stroms der Flüssigkeitsstromlinien angeordnet ist, um von den genannten Flüssigkeitsstromlinien getroffen zu werden, die die horizontal schwenkbaren Schaufeln (31) öffnen und die kinetische Energie der Flüssigkeit den fortschreitend offenen horizontal schwenkbaren Schaufeln (31) übertragen, und die Drehung der horizontal schwenkbaren Schaufeln (31), um sich zur Arbeitsstellung zu bewegen, nach außen erfolgt, so dass in der Öffnungsbewegung die freie Kante der horizontal schwenkbaren Schaufel (31) von der Hauptdrehachse, die von einer Welle (28) der Turbine definiert ist, beabstandet ist.

19. Anlage zur Erzeugung elektrischer Energie, **dadurch gekennzeichnet, dass** sie zumindest eine Station (11) umfasst, die aus zumindest einer Turbine (10) nach einem der Ansprüche 1 bis 16 besteht, die möglicherweise dazu geeignet ist, mit zumindest einer anderen Station (11) mechanisch verbunden zu werden, um ein System zur Erzeugung elektrischer Energie (12) zu bilden, das dazu geeignet ist, seinerseits mit einer externen Einheit verbunden zu werden, um kinetische Energie in elektrische Energie umzuwandeln.

20. Anlage zur Erzeugung elektrischer Energie, **dadurch gekennzeichnet, dass** sie zumindest eine Station (11) umfasst, die aus zumindest einer Turbine (10) nach einem der Ansprüche 1 bis 16 besteht, die in ihrem Inneren mit einem selbständigen System zur Umwandlung von kinetischer Energie in elektrische Energie versehen ist, wobei die genannte Station (11) möglicherweise dazu geeignet ist, mit zumindest einer anderen Station (11) mechanisch verbunden zu werden, um ein System zur Erzeugung elektrischer Energie (12) zu bilden.

## Revendications

1. Turbine pour la production d'énergie électrique, associée à un système (12) de production d'énergie électrique constitué d'au moins une station (11) fonctionnant dans un écoulement de filets de fluide, comme de l'eau ou de l'air, ladite turbine étant constituée d'au moins deux unités tournantes (27), pourvues de pales équidistantes (31), **caractérisée en ce que** les pales (31) de chacune des unités tournantes (27) pivotent horizontalement autour d'un axe de pivotement sensiblement parallèle à l'axe de son unité tournante respective (27) et possèdent une position d'ouverture radiale maximale et une position d'ouverture radiale minimale, **en ce que** lesdites pales (31) présentent une forme concave et sont concordantes, lors de leurs utilisation, avec les filets de fluide du courant, **en ce que** chaque unité tournante (27) a son propre axe de rotation sensiblement vertical et orthogonal par rapport à l'écoulement du fluide, ledit axe de rotation étant défini par un arbre (28) de forme polygonale en coupe transversale, chacune desdites unités tournantes (27) comportant un cylindre intercalaire (29) et deux disques circulaires (30) positionnés l'un opposé à l'autre aux deux extrémités du cylindre intercalaire (29), lesdits disques circulaires (30) supportant lesdites pales (31), chacun desdits disques circulaires (30) comportant un trou central (34) relié mécaniquement à l'arbre (28) et une ou plusieurs rangées de trous intérieurs (36) et de trous extérieurs (37), un pivot ou une barre de rotation (38) étant positionné dans les trous intérieurs (36), et inséré dans le tuyau (32) et permettant la rotation sur charnière des pales pivotantes horizontales (31), et **en ce que** chacune desdites pales (31) est pourvue de moyens de positionnement à ouverture radiale maximale, comportant un tuyau (32), soudé sur la surface concave de la pale (31), ayant un bord destiné à venir en contact avec le cylindre intercalaire (29) dans la position de travail d'ouverture radiale maximale, et étant pourvu de moyens de positionnement à ouverture radiale minimale comportant des broches ou des barres de fin de course (39) logées dans les trous extérieurs (37) pour définir la position de travail d'ouverture radiale minimale des pales pivotantes horizontales (31),
dans laquelle l'axe de rotation des pales pivotantes horizontales (31) entre les positions d'ouverture minimale et maximale est dans une position proche au cylindre intercalaire (29), et la rotation des pales pivotantes horizontales (31) vers la position de travail est dirigée vers l'extérieur, de façon que le mouvement d'ouverture comporte un éloignement du bord libre de la pale pivotante horizontale (31) de l'axe principal de rotation défini par l'arbre (28).

2. Turbine selon la revendication 1, **caractérisée en ce qu'**il y a au moins trois desdites pales pivotantes horizontales (31).

3. Turbine selon n'importe laquelle des revendications précédentes, **caractérisée en ce que** ladite position d'ouverture radiale minimale est configurée pour faciliter l'action d'ouverture radiale de ladite pale pivotante horizontale (31) par les filets de fluide.

4. Turbine selon n'importe laquelle des revendications précédentes, **caractérisée en ce que** lesdites pales (31) ont une forme d'arc de cercle.

5. Turbine selon la revendication 4, **caractérisée en ce que** les pales pivotantes horizontales (31) possèdent un profil en arc de circonférence dont la longueur n'est pas supérieure, ou n'est que légèrement supérieure à un tiers de la circonférence du cylindre intercalaire (29), et dont le rayon est égal ou supérieur à celui du cylindre intercalaire (29).

6. Turbine selon n'importe laquelle des revendications précédentes, **caractérisée en ce que** le cylindre intercalaire (29) comporte des matériaux denses.

7. Turbine selon n'importe laquelle des revendications précédentes, **caractérisée en ce qu'**elle est constitué d'éléments qui peuvent être désassemblés.

8. Turbine selon n'importe laquelle des revendications précédentes, **caractérisée en ce qu'**elle est un module qui peut former un système modulaire.

9. Turbine selon n'importe laquelle des revendications précédentes, **caractérisée en ce qu'**elle peut être assemblés de façon modulaire pour créer un système (12) modulaire de production d'énergie électrique.

10. Turbine selon n'importe laquelle des revendications précédentes, **caractérisée en ce qu'**elle peut être reliée à un dispositif externe de conversion d'énergie cinétique en énergie électrique.

11. Turbine selon n'importe laquelle des revendications précédentes, **caractérisée en ce qu'**elle comporte un système autonome interne de conversion d'énergie cinétique en énergie électrique.

12. Turbine selon n'importe laquelle des revendications précédentes, **caractérisée en ce que** l'axe de rotation des pales pivotantes horizontales (31) entre la position d'ouverture maximale et la position d'ouverture minimale est dans une telle position que le mouvement d'ouverture des pales pivotantes horizontales (31) est dirigé vers l'extérieur.

13. Turbine selon n'importe laquelle des revendications précédentes, **caractérisée en ce qu'**elle prévoit une broche ou une barre auxiliaire (35), reliant les deux disques circulaires (30), et configurée avec la fonction de support pour limiter une pale pivotante horizontale individuelle (31) dans sa position d'ouverture radiale maximale.

14. Turbine selon n'importe laquelle des revendications précédentes, **caractérisée en ce que**, dans les disques circulaires (30), les trous intérieurs (36) et les trous extérieurs (37) sont réalisés et groupés en paires constituées d'un trou intérieur (36) et un trou extérieur (37) pour chaque paire, le trou intérieur (36) et le trou extérieur (37) étant alignés le long d'une direction commune inclinée par rapport à une direction radiale de référence.

15. Turbine selon la revendication 14, **caractérisée en ce que** le nombre des paires de trous intérieurs (36) et de trous extérieurs (37) de chaque disque circulaire (30) de l'unité tournante (27) est un multiple du nombre des pales pivotantes horizontales (31) reliées à l'unité tournante individuelle (27), le nombre des paires de trous intérieurs (36) et de trous extérieurs (37) étant choisi de manière à minimiser le nombre des pivots de rotation (38) et des broches de fin de course (39).

16. Turbine selon la revendication 14 ou 15, **caractérisée en ce qu'**elle prévoit des broches ou des barres longues, s'étendant d'une extrémité à l'autre de la turbine, et destinées à être insérées et retirées par-dessus, de façon traversante, dans les et des trous intérieurs (36) et trous extérieurs (37) correspondants, chacune des broches ou barres longues étant un élément oblong unique couvrant la hauteur entière de la turbine, et chacune des broches ou barres exerçant une fonction différente le long de l'axe de la turbine, y inclus la fonction de broche de fin de course minimale (39) à une certaine hauteur pour la pale pivotante horizontale (31) d'une unité tournante (27), et la même broche longue exerce la fonction de pivot de rotation (38) à une autre hauteur pour une pâle pivotante horizontale (31) d'une autre unité tournante (27).

17. Système constitué d'une pluralité de turbines selon n'importe laquelle des revendications précédentes, **caractérisé en ce que** les turbines sont en positions coaxiales et les pales pivotantes horizontales (31) correspondantes sont agencées de manière séquentielle, donnant lieu à un développement sensiblement en hélice, le long de la direction longitudinale de ladite turbine.

18. Procédé de fonctionnement d'une turbine selon importe laquelle des revendications 1 à 16, pour la production d'énergie électrique, associé à un système (12) de production d'énergie électrique, **caractérisé en ce que** ladite turbine est en position sensiblement orthogonale au plan supérieur du courant de filets de fluide, pour être investie par lesdits filets de fluides, qui ouvrent les pales pivotantes horizontales (31) et transfèrent l'énergie cinétique du fluide aux pales pivotantes horizontales s'ouvrant progressivement (31) et la rotation des pales pivotantes horizontales (31) vers la position de travail est dirigée vers l'extérieur, de manière que, dans le mouvement d'ouverture le bord libre de la pale pivotante horizontale (31) s'éloigne de l'axe de rotation principale définie par un arbre (28) la turbine.

19. Installation de production d'énergie électrique, **caractérisée en ce qu'**elle comprend au moins une station (11), constituée d'au moins une turbine (10) selon n'importe laquelle des revendications 1 à 16, éventuellement apte à être reliée mécaniquement à au moins une autre station (11) pour former un système (12) de production d'énergie électrique, pouvant être relié à son tour à une unité extérieure de transformation de l'énergie cinétique en énergie électrique.

20. Installations de production d'énergie électrique, **caractérisé en ce qu'**elle comprend au moins une station (11), constituée d'au moins une turbine (10) selon n'importe laquelle des revendications 1 à 16, pourvue d'un système autonome interne de conversion d'énergie cinétique en énergie électrique, ladite station (11) étant éventuellement apte à être reliée mécaniquement à au moins une autre station (11) pour former un système (12) de production d'énergie électrique.
